# EUROPÄISCHE PATENTSCHRIFT

(11) **EP 2 045 136 B1**
(45) Veröffentlichungstag und Bekanntmachung des Hinweises auf die Patenterteilung: **20.01.2010**
(21) Anmeldenummer: 08016815.6
(22) Anmeldetag: 25.09.2008
(51) Int. Cl.: B60R 3/00, F16B 2/06

(54) **Klemmhalter**
Tool holder
Support de pince

(30) Priorität: 05.10.2007 DE 102007047777
(43) Veröffentlichungstag der Anmeldung: 08.04.2009
(73) Patentinhaber: MAN Nutzfahrzeuge AG, 80995 München (DE)
(72) Erfinder: Bleeker, Robert, 82556 Fürstenfeldbruck (DE)

(56) Entgegenhaltungen:
- DE-A1- 1 400 882
- DE-A1- 10 137 379
- US-A- 1 327 011
- US-A- 2 227 873
- US-A- 3 731 967

## Beschreibung

Die Erfindung betrifft eine Vorrichtung zur Befestigung einer begehbaren Platte nach dem Oberbegriff des Anspruchs 1.

Aus der DE 101 37 379 A1 und US 222 7 873 ist ein gebauter Tragrahmen für ein Kraftfahrzeug, insbesondere ein Nutzfahrzeug bekannt, der zwei Längsträger aufweist, die über wenigstens einen Querträger miteinander verbunden sind. Die Längsträger bestehen jeweils aus einem Obergurt und einem Untergurt, sowie wenigstens aus einem den Obergurt mit dem Untergurt verbindenden vertikalen Steg. Wenigstens ein Längsabschnitts des Tragrahmens ist als Versteifungsabschnitt ausgebildet, dem zwei Stege und zwei Querträger, nämlich ein oberer Querträger und ein unterer Querträger zugeordnet sind. Hierbei ist der obere Querträger einerseits mit dem Obergurt und dem Steg des einen Längsträgers und andererseits mit dem Obergurt und dem Steg des anderen Längsträgers verbunden. Der untere Querträger ist einerseits mit dem Untergurt und dem Steg des einen Längsträgers und andererseits mit dem Untergurt und dem Steg des anderen Längsträgers verbunden. Im Bereich der hinter dem Fahrerhaus angeordneten Querträger befindet sich die Arbeitsbühne die einen für den Kraftfahrzeuglenker im Stillstand des Nutzfahrzeuges begehbaren Laufsteg umfasst. Wünschenswert und nach DIN 1726 erforderlich ist dabei wegen des insbesondere bei Sattelfahrzeügen geforderten Aufliegerfreiraumes eine niedrige Laufstegoberkante.

Es ist die Aufgabe der Erfindung, die Anbindung einer insbesondere als Laufsteg dienenden Platte an den Obergurten eines Rahmenlängsträgers eines Nutzfahrzeuges in dieser Hinsicht zu optimieren.

Die Aufgabe wird erfindungsgemäß durch die Merkmale des Patentanspruchs 1 gelöst.

Vor der Montage der begehbaren Platte, im Weiteren wird von einem Laufsteg ausgegangen, am Obergurt wird die Befestigungsvorrichtung an wenigstens 4 Stellen mit dem Laufsteg verschraubt. Die Befestigungsvorrichtung wird dabei an der Unterseite des Laufstegs so positioniert, dass die Schraubverbindung bei Auflage des Laufstegs auf den Längsträgern auf der Innenseite der Außenkante des Längsträgers und zu dieser beabstandet, angeordnet ist. Die Außenkante des Längsträgers weist dabei zur Fahrzeugmitte hin. Im Offenzustand befindet sich das Unterteil der Befestigungsvorrichtung in einer Lage, etwa parallel zur Außenkante des Obergurts. In der Funktionsweise eines Schraubengetriebes greift das Außengewinde des Zapfens des Unterteils in das Innengewinde der Bohrung des Oberteils ein. Zapfen und Bohrungen bilden eine Paarung mit Spiel für einen leichtgängigen drehaxialen Vorschub des Zapfens in der Bohrung des Oberteils. Durch Anziehen der Spannschraube greift das Außengewinde des Zapfens in das Innengewinde der Bohrung des Oberteils ein, wodurch die axiale Hubbewegung des Unterteils in Richtung auf das Oberteil entlang der Spannschraube in eine Hubdrehbewegung entlang der Gewindegänge des Innengewindes der Bohrung des Oberteils umgewandelt wird. In einer spiralförmigen Bewegung verschwenkt das Unterteil bei Anziehen der Spannschraube aus der Offenstellung neben dem Obergurt in eine Schließstellung, in der das Unterteil etwa deckungsgleich zu dem auf dem Obergurt aufliegenden Oberteil positioniert ist. Gleichzeitig vollzieht das Unterteil eine Hubbewegung und gelangt aus einer Offenstellung, in der die dem Obergurt zugewandete Seite des Unterteils axial vom Obergurt beabstandet ist, in die Schließstellung, in der das Unterteil mit seiner dem Obergurt zugewandeten Seite an der Unterseite des Obergurtes im Klemmsitz anliegt. Durch den spiralförmigen Bewegungsablauf des Unterteils gegenüber dem Oberteil und der Anordnung der Schraubverbindung außerhalb der Außenkante des Obergurts können unter der Unterkante des Obergurts Kommunikationsträger wie z. B. Elektro- und Druckluftleitungen entlang geführt werden. Es besteht keine Gefahr, dass in Folge der Hubschwenkbewegung des Unterteils gegenüber dem Obergurt aus der Offenstellung in die Schließstellung versehentlich Elektroleitungen, die sich in Schutzschläuchen befinden bzw. Pneumatikleitungen ein- bzw. verklemmt werden.

Eine Beschädigung der Elektro- und Druckluftleitungen durch Scheuern an der Befestigungsvorrichtung wird durch die rundkantige Ausführung der Gussteile der Befestigungsvorrichtung vermieden. Die erfindungsgemäße Befestigungsvorrichtung wird unverlierbar am Laufsteg befestigt. Der Laufsteg wird im Verbund mit den Befestigungsvorrichtungen auf dem/die Obergurte aufgelegt. Durch Verschwenken des Unterteils in die Schließstellung erfolgt die unverlierbare Verbindung des Laufstegs mit dem Obergurt. Hierdurch ist die Befestigungsvorrichtung universell einsetzbar. Die erfindungsgemäße Befestigungsvorrichtung ist nicht auf die Befestigung des Laufstegs an den Obergurten der beiden Rahmenlängsträger des LKWs beschränkt, sondern kann auch zur Befestigung anderer Teile am Nutzfahrzeug verwendet werden. Dadurch, dass der Laufsteg mit einem Lochbild versehen ist, das eine Vielzahl von Bohrungen aufweist, kann die Befestigungsvorrichtung an jeder erforderlichen Stelle des Laufstegs angeordnet und dieser an unterschiedlichen Stellen am Obergurt befestigt werden.

Nach einer anderen Ausführungsform der Erfindung ist das Unterteil mittels eines unteren Abstandhalters vom Obergurt distanziert.

In einer weiteren Ausführungsform der Erfindung ist im Oberteil ein oberer Abstandshalter verankert, der den Laufsteg vom Obergurt distanziert. Durch Verwendung oberer Abstandshalter unterschiedlicher Dicke ist es möglich, die erfindungsgemäße Befestigungsvorrichtung zur Anbringung an Obergurten unterschiedlicher Dicke zu verwenden.

Eine andere Ausführungsform der Erfindung sieht vor, dass eine Schraube eine Lochbildbohrung des Laufstegs durchsetzt und in eine Gewindebohrung des oberen Abstandshalters eingreift. Hierdurch wird eine verliersichere Anbringung der Befestigungsvorrichtung am Laufsteg ermöglicht, so dass nach Aufsetzen des Laufstegs auf die Obergurte zur verliersicheren Befestigung des Laufstegs das Unterteil nur mehr aus der Offenstellung in die Schließstellung verbracht werden muss.

Nach einer anderen Ausführungsform der Erfindung ist vorgesehen, dass das Oberteil mit dem Laufsteg verbunden ist.

In einer anderen Ausführungsform der Erfindung stützt sich das Unterteil in Schließstellung außerhalb der Außenkante des Obergurtes mit einer Schulter gegenüber dem Oberteil ab. Dabei kann die Schulter entweder am Unterteil oder am Oberteil angeordnet sein. Die Schulter ermöglicht, dass mit Erreichen der Schließstellung durch das Unterteil die Befestigungsvorrichtung im verliersicheren Klemmsitz am Obergurt verbleibt.

Eine andere Ausführungsform der Erfindung sieht vor, dass der Flankenwinkel des Außengewindes des Zapfens größer ist, als der Flankenwinkel der Spannschraube.

In einer anderen Ausführungsform der Erfindung weist das Außengewinde des Zapfens einen die Gleitfähigkeit der Gewindegänge erhöhenden Belag auf. Vorstellbar ist, dass der Belag eine Teflonschicht ist.

Weitere vorteilhafte Ausgestaltungen und zweckmäßige Fortbildungen der erfindungsgemäßen Befestigungsvorrichtung sind aus der nachstehenden Beispielsbeschreibung anhand der Zeichnung näher entnehmbar. In der Zeichnung zeigen:
- Figur 1: die Befestigungsvorrichtung im Klemmsitz an einem Rahmenlängsträger,
- Figur 2: den Längsschnitt CC durch die Befestigungsvorrichtung in Schließstellung entsprechend Figur 1,
- Figur 3: die erfindungsgemäße Befestigungsvorrichtung in Offenstellung,
- Figur 4: den Schnitt durch die Befestigungsvorrichtung nach Figur 3 entsprechend der Schnittlinie AA und
- Figur 5: den Schnitt entsprechend der Schnittlinie BB aus der Figur 3.

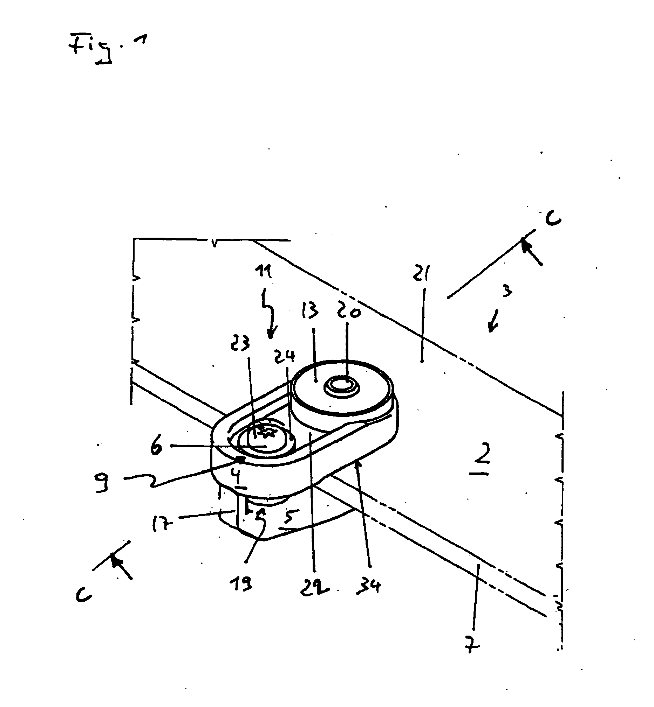

Figur 1 zeigt die Befestigungsvorrichtung mit einem Oberteil 4, und einem Unterteil 5, die durch eine Schraubverbindung 19 miteinander verbunden sind. Die in der Figur dargestellte Befestigungsvorrichtung befindet sich in Schließstellung 11 und ist im Klemmsitz am Obergurt 2 des Rahmenlängsträgers 3 befestigt. Gleichzeitig befindet sich das Unterteil 5 mit seiner dem Obergurt 2 zugewandten Seite in Anlage mit der Unterseite des Obergurts 2. Die Außenkante des Obergurts 2 ist mit Bezugsziffer 7 bezeichnet. Das Oberteil 4 weist eine Aussparung 22 auf, in der ein oberer Abstandshalter 13 verankert ist, der den (nicht dargestellten) Laufsteg 1 vom Obergurt 2 distanziert. Im oberen Abstandshalter 13 ist eine Gewindebohrung 20 dargestellt, die dem Eingriff einer Schraube 14 dient, die eine der Lochbildbohrungen 15 des Laufstegs 1 durchsetzt und mit deren Hilfe der Laufsteg 1 verliersicher am Oberteil 4 der Befestigungsvorrichtung befestigt wird. In dem Bereich der Aussparung 22 des Oberteils 4, der über die Außenkante 7 hinausragt, ist der Schraubenkopf 23 der Spannschraube 6 erkennbar. Die Spannschraube 6 verläuft in etwa rechtwinklig zur Außenkante 7 des Obergurts 2 und durchsetzt die Bohrung 9 des Oberteils 4 sowie den Zapfen 8 des Unterteils 5. An der Unterseite des Schraubenkopfes 23 der Spannschraube 6 ist eine ringförmige Schraubenkopfunterlage 24 dargestellt, mit der die Spannschraube 6 das Oberteil 4 hintergreift. In Schließstellung 11 stützt die Schulter 17 außerhalb der Außenkante 7 den Unterteil 5 gegenüber dem Oberteil 4 ab. Die Schulter 17 ist dabei mit dem Unterteil 5 verbunden und entspricht in ihrer Dicke etwa der Dicke des Obergurts 2.

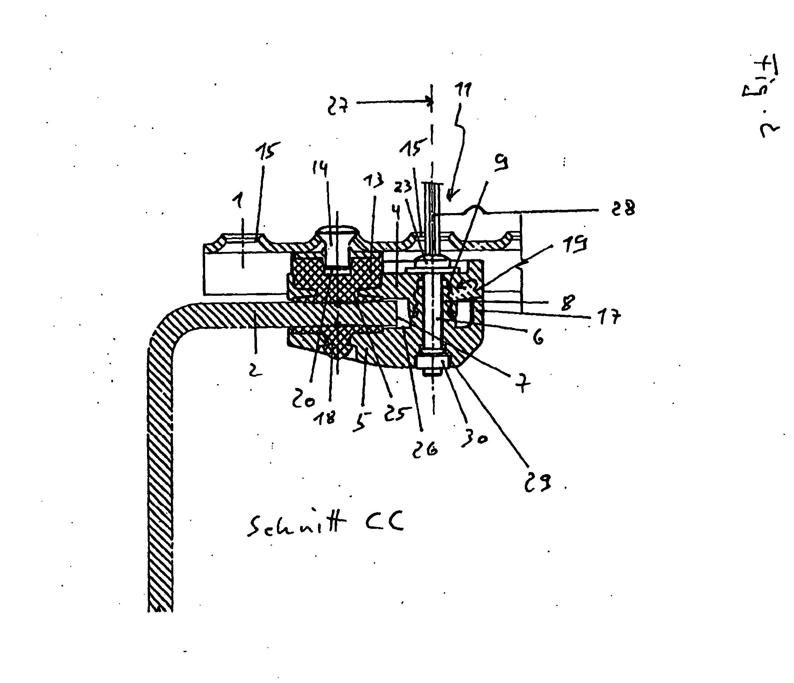

Figur 2 zeigt den Schnitt durch die im Klemmsitz am Obergurt 2 angeordnete Befestigungsvorrichtung entsprechend der Schnittlinie CC der Figur 1. Die Schnittzeichnung in Figur 2 ist gegenüber der Figur 1 seitenverkehrt dargestellt. In dem Laufsteg 1, der in Figur 2 als begehbarer Laufsteg dargestellt ist, sind die Lochbildbohrungen 15 gezeigt, von denen eine mit einer Schraube 14 durchsetzt ist, die in eine Gewindebohrung 20 des oberen Abstandshalters 13 eingreift. Der obere Abstandshalter 13 ist zweigeteilt und weist einen oberen Distanzhalter 38 auf, der unterschiedlich dick sein kann und mit dessen Hilfe der Abstand zwischen Oberteil 4 und Laufsteg 1 regelbar ist. Über die Dicke des Distanzhalters 38 ist der Abstand zwischen Laufsteg 1 und der Unterseite des Aufliegers regulierbar. Zusätzlich weist der obere Abstandshalter 13 einen unteren Distanzhalter 39 auf, der eine entnahmesichere Verankerung 25 des oberen Abstandshalters 13 im Oberteil 4 sicherstellt und gleichzeitig als elastisches Abstandselement zum Obergurt dient. Der untere Distanzhalter 39 ragt aus der Ebene der Unterseite 34 des Oberteils 4 heraus und distanziert die Unterseite 34 in Schließstellung 11 von der Oberseite 21 des Obergurtes 2. In etwa fluchtend mit dem Oberen Abstandshalter 13 ist im Unterteil 5 ein elastischer unterer Abstandshalter 18 angeordnet, der wie der obere Abstandshalter 13 aus Gummi gefertigt ist und die Unterseite des Obergurts 2 von der Oberseite 26 des Unterteils 5 distanziert. Außerhalb der Außenkante 7 des Obergurts 2 ist die Schraubverbindung 19 dargestellt, die den mit der Bohrung 9 des Oberteils 4 in Eingriff befindlichen Zapfen 8 sowie die Spannschraube 6 umfasst. In Figur 2 ist die Befestigungsvorrichtung in Schließstellung 11 dargestellt, in Verlängerung der Längsachse 27 der Spannschraube 6 ist ein Werkzeug 28 z. B. ein Inbusschlüssel oder ein Schraubendreher dargestellt, der in den Schraubenkopf 23 der Spannschraube 6 eingreift. An dem von der Außenkante 7 abgewandten Ende des Unterteils 5 ist eine Schulter 17 erkennbar, deren freie Höhe etwa der Dicke des Obergurts 2 entspricht. An der von dem Obergurt 2 abgewandten Seite des Unterteils 5 sitzt eine Sicherungsmutter 30 in einer Aussparung 29 des Unterteils 5 und wird von der Spannschraube 6 durchsetzt.

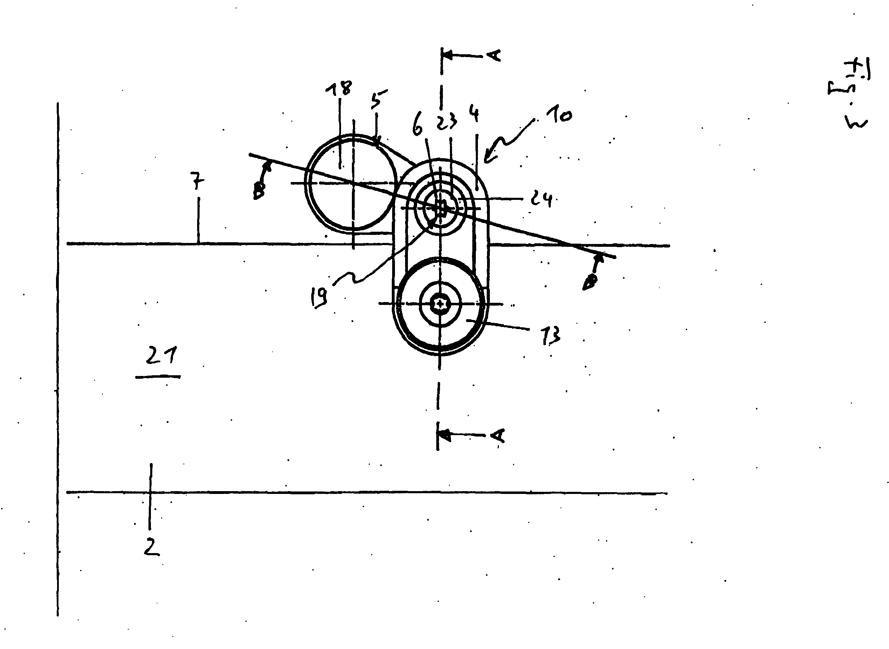

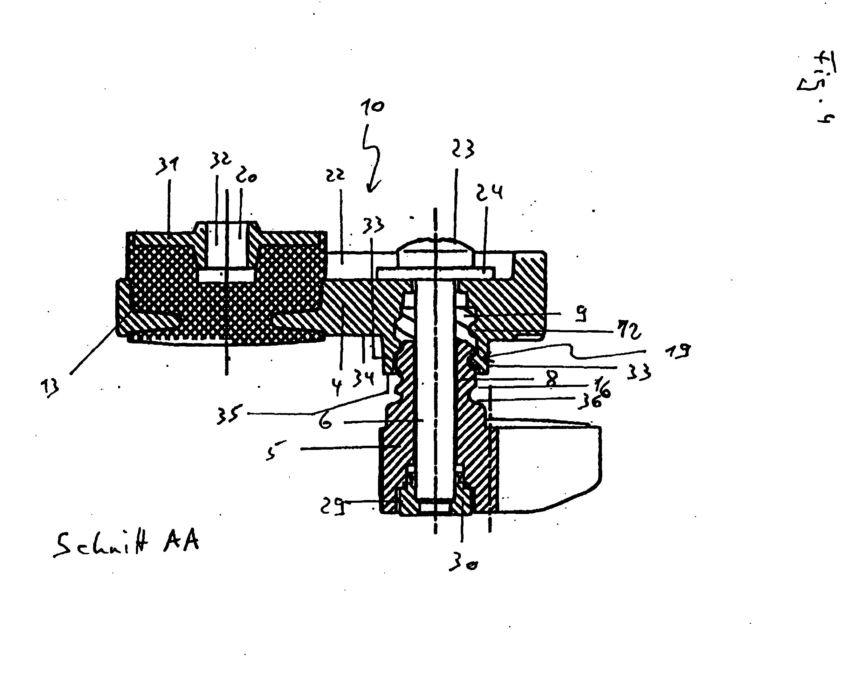

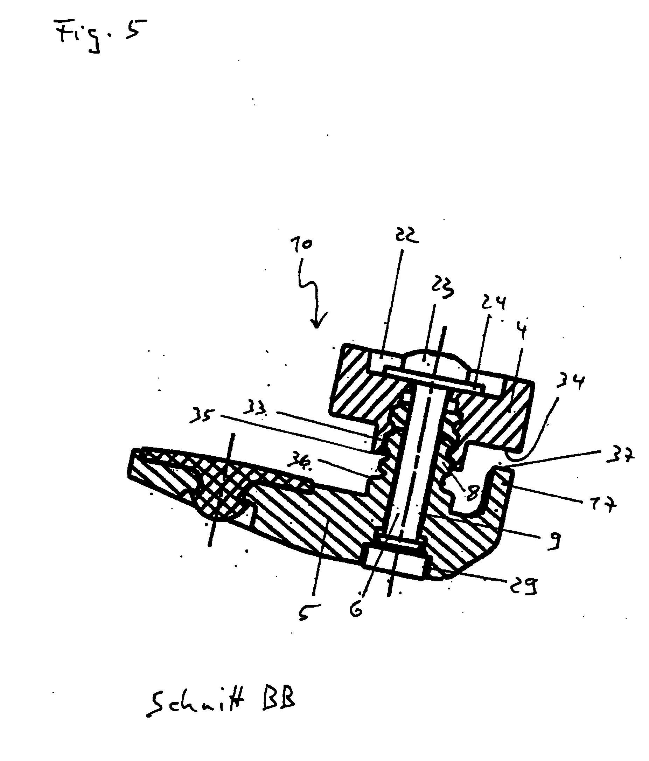

Figur 3 zeigt in Draufsicht, das auf der Oberseite 21 des Obergurts 2 aufliegende Oberteil 4 mit einem oberen Abstandshalter 13 und einem Schraubekopf 23 sowie einer Schraubenkopfunterlage 24 der Spannschraube 6. Axial unterhalb des Schraubenkopfes 23 befindet sich die Schraubverbindung 19. Die Befestigungsvorrichtung ist in Figur 3 in Offenstellung 10 dargestellt, so dass das Unterteil 5 mit dem unteren Abstandshalter 18 etwa parallel zur Außenkante 7 des Obergurts 2 zu liegen kommt. In die Figur 3 sind jeweils die Schnittlinien BB sowie AA eingezeichnet, auf die in den Figuren 5 sowie 4 Bezug genommen wird.

Figur 4 zeigt den Schnitt durch die Befestigungsvorrichtung entlang der Schnittlinie AA aus Figur 3. In der Figur 4 ist die erfindungsgemäße Befestigungsvorrichtung in Offenstellung 10 dargestellt, wobei das Oberteil 4 und das Unterteil 5 etwa in einem Winkel > 90° zueinander angeordnet sind. In Figur 4 ist der im Oberteil 4 verankerte obere Abstandshalter 13 erkennbar. Auf dem oberen Abstandshalter 13 sitzt eine Gewindeplatte 31, die das Lager 32 der Gewindebohrung 20 bildet und den oberen Abstandshalter 13 des Oberteils 4 seitlich partiell übergreift. In der in Figur 4 gezeigten Offenstellung 10 ist der Zapfen 8 soweit aus der Bohrung 9 herausgefahren, wie es die Länge der Spannschraube 6 erlaubt, ohne den Kontakt mit der Sicherungsmutter 30 in dem Umfang, wie sie ihn in Schließstellung innehat zu verändern. Die Sicherungsmutter 30 sitzt in einem Klemmsitz in einer Aussparung 29 des Unterteils 5. Die Figur 4 zeigt, dass auch in Offenstellung 10 der Befestigungsvorrichtung die Spannschraube 6 den Zapfen 8 des Unterteils 5 durchsetzt, wobei der Zapfen 8 im Vergleich zur Schließstellung 11 nur noch in einem vergleichsweise geringen Umfang in die Bohrung 9 des Oberteils 4 eingreift. Der Zusammenhalt des Oberteils 4 und des Unterteils 5 wird durch die Schraubverbindung 19 bewirkt. Die Schraubenkopfunterlage 24 des Schraubenkopfes 23 sowie die Sicherungsmutter 30 verankern die Schraubverbindung 19 auf der Spannschraube 6.

Figur 5 zeigt den Schnitt durch die Befestigungsvorrichtung entsprechend den Schnittlinien BB der Figur 3. Hierbei befindet sich die Befestigungsvorrichtung in Offenstellung 10, wobei der Zapfen 8 des Unterteils 5 vergleichbar mit Figur 4 im Vergleich zur Schließstellung 11 in einem nur geringen Maße in die Bohrung 9 des Oberteils 4 eingreift. Aus Figur 5 wird erkennbar, dass das Oberteil 4 an seiner Unterseite 34 einen axialen Fortsatz 33 aufweist, in der die Bohrung 9 verläuft und der in der axialen Ausdehnung etwa der Tiefe aus Aussparung 29 entspricht. Die Aussparung 22 des Oberteils 4 dient dabei der Aufnahme des Schraubenkopfes 23 sowie der Schraubenkopfunterlage 24 der Spannschraube 6. In Gegenüberstellung von Figur 2 und Figur 5 wird ersichtlich, dass bei Erreichen der Schließstellung 11 (vergleiche Figur 2) axial gesehen die Unterkante 35 des Fortsatzes 33 auf einen Sockel 36 des Unterteils 5 zur Anlage kommt. Somit wird eine weitere Schwenkbewegung des Unterteils 5 über die Schließstellung 11 hinaus verhindert. In gleicher Weise ist die Oberkante 37 der Schulter 17 in Offenstellung 10 axial gesehen zur Unterseite 34 des Oberteils 4 beabstandet. Bei Erreichen der Schließstellung liegt die Oberkante 37 der Schulter 17 an der Unterseite 34 des Oberteils 4 an. (Vgl. Fig. 2)

### Bezugsziffern

- 1: Platte
- 2: Obergurt
- 3: Rahmenlängsträger
- 4: Oberteil
- 5: Unterteil
- 6: Spannschraube
- 7: Außenkante
- 8: Zapfen
- 9: Bohrung
- 10: Offenstellung
- 11: Schließstellung
- 12: Innengewinde
- 13: oberer Abstandshalter
- 14: Schraube
- 15: Lochbildbohrung
- 16: Außengewinde
- 17: Schulter
- 18: unterer Abstandshalter
- 19: Schraubverbindung
- 20: Gewindebohrung
- 21: Oberseite des Obergurts
- 22: Aussparung des Oberteils
- 23: Schraubenkopf
- 24: Schraubenkopfunterlage
- 25: Verankerung des Gummielements
- 26: Oberseite des Unterteils
- 27: Längsachse der Spannschraube
- 28: Werkzeug
- 29: Aussparung des Unterteils
- 30: Sicherungsmutter
- 31: Gewindeplatte
- 32: Lager
- 33: Fortsatz
- 34: Unterseite des Oberteils
- 35: Unterseite des Fortsatzes
- 36: Sockel des Unterteils
- 37: Oberkante der Schulter
- 38: Oberer Distanzhalter
- 39: Unterer Distanzhalter

## Patentansprüche

1. Vorrichtung zur Befestigung einer begehbaren Platte (1), insbesondere eines Laufstegs an den Obergurten (2) eines Rahmenlängsträgers (3) eines LKW-Fahrgestells mit einem auf dem Obergurt (2) aufliegenden und die Platte (1) tragenden Oberteil (4) und einem den Obergurt (2) untergreifenden Unterteil (5), die durch eine Spannschraube (6) gegeneinander verspannt sind, **dadurch gekennzeichnet, dass** eine Schraubverbindung (19) außerhalb einer Aussenkante (7) des Obergurtes (2) angeordnet ist und dass auf dem Unterteil (5) ein Zapfen (8) angeordnet ist, der ein Außengewinde (16) aufweist, und mit diesem beim Anziehen der Spannschraube (6) in ein Innengewinde (12) einer Bohrung (9) des Oberteils (4) hineindrehbar und gleichzeitig das Unterteil (5) aus einer Offenstellung (10) neben dem Obergurt (2) in eine Schließstellung (11) verschwenkbar ist, in der das Unterteil (5) etwa deckungsgleich zu dem auf dem Obergurt (2) aufliegenden Oberteil (4) positioniert ist, und dass die Spannschraube (6) den Zapfen (8) durchsetzt und das Oberteil (4) hintergreift.

2. Vorrichtung nach Anspruch 1, **dadurch gekennzeichnet, dass** das Unterteil (5) mittels eines unteren Abstandhalters (18) vom Obergurt (2) distanziert ist.

3. Vorrichtung nach Anspruch 1, **dadurch gekennzeichnet, dass** im Oberteil (4) ein oberer Abstandshalter (13) verankert ist, der die Platte (1) vom Obergurt (2) distanziert.

4. Vorrichtung nach Anspruch 3, **dadurch gekennzeichnet, dass** eine Schraube (14) eine Lochbildbohrung (15) der Platte (1) durchsetzt und in eine Gewindebohrung des oberen Abstandshalters (13) des Oberteils (4) eingreift.

5. Vorrichtung nach Anspruch 1, **dadurch gekennzeichnet, dass** das Oberteil (4) mit der Platte (1) verbunden ist.

6. Vorrichtung nach Anspruch 1, **dadurch gekennzeichnet, dass** sich das Unterteil (5) in Schließstellung (11) außerhalb der Aussenkante (7) mit einer Schulter (17) gegenüber dem Oberteil (4) abstützt.

7. Vorrichtung nach Anspruch 6, **dadurch gekennzeichnet, dass** die freie Höhe der Schulter (17) etwa der Dicke des Obergurtes (2) entspricht.

8. Vorrichtung nach Anspruch 1, **dadurch gekennzeichnet, dass** der Flankenwinkel des Außengewindes (16) des Zapfens (8) größer ist, als der Flankenwinkel der Spannschraube (6).

9. Vorrichtung nach Anspruch 1, **dadurch gekennzeichnet, dass** das Außengewinde (16) des Zapfens (8) einen die Gleitfähigkeit der Gewindegänge erhöhenden Belag aufweist.

## Claims

1. Fixture for securing a walk-on panel (1), in particular a catwalk affixed to the upper straps (2) of a frame side member (3) of a truck chassis, with an upper section (4) that rests on the upper strap (2) and also supports the panel (1), and a lower section (5) that engages with the upper strap (2) from below. These sections are tightened against each other by means of a tensioning bolt (6). This fixture is **characterised by** a bolted connection (19) being located beyond the outer edge (7) of the upper strap (2), and also by a pin (8) that features an external thread (16) being located on the lower section (5). This allows the pin to be screwed into an internal thread (12) of a bore (9) on the upper section (4) when the tensioning bolt (6) is tightened, whilst at the same time allowing the lower section (5) to be swivelled from an open position (10) next to the upper strap (2) into a closed position (11). In this position, the lower section (5) is roughly congruent with the upper section (4) that rests on the upper strap (2). The tensioning bolt (6) pushes against the pin (8) and engages with the upper section (4) from behind.

2. Fixture as per claim 1, **characterised by** the lower section (5) being kept at a distance from the upper strap (2) by means of a lower spacer (18).

3. Fixture as per claim 1, **characterised by** an upper spacer (13) being anchored to the upper section (4), which keeps the panel (1) at a distance from the upper strap (2).

4. Fixture as per claim 3, **characterised by** a bolt (14) penetrating a hole pattern bore (15) of the panel (1) and engaging with a threaded bore of the upper spacer (13) of the upper section (4).

5. Fixture as per claim 1, **characterised by** the upper section (4) being connected to the panel (1).

6. Fixture as per claim 1, **characterised by** the lower section (5) being supported against the upper section (4) by a shoulder (17) beyond the outer edge (7) when in the closed position (11).

7. Fixture as per claim 6, **characterised by** the free height of the shoulder (17) roughly matching the thickness of the upper strap (2).

8. Fixture as per claim 1, **characterised by** the thread angle of the external thread (16) of the pin (8) being greater than the thread angle of the tensioning bolt (6).

9. Fixture as per claim 1, **characterised by** the external thread (16) of the pin (8) featuring a coating that improves the glide of the thread turns.

## Revendications

1. Dispositif destiné à fixer une plaque accessible à pied (1), en particulier une plate-forme, sur les semelles supérieures (2) d'un longeron de cadre (3) d'un châssis de camion avec une partie supérieure (4) reposant sur la semelle supérieure (2) et portant la plaque (1) et une partie inférieure (5) appliquée par le dessous contre la semelle supérieure (2), les deux parties étant serrées l'une contre l'autre au moyen d'une vis de serrage (6), **caractérisé en ce qu'**un assemblage vissé (19) est disposé en dehors d'un bord extérieur (7) de la semelle supérieure (2) et qu'un tenon (8) est disposé sur la partie inférieure (5), qui présente un filetage (16) grâce auquel il peut être vissé lors du serrage de la vis de serrage (6) dans un taraudage (12) d'un alésage (9) de la partie supérieure (4) et la partie inférieure (5) peut être pivotée simultanément à partir d'une position d'ouverture (10) à côté de la semelle supérieure (2) dans une position de fermeture (11) dans laquelle la position de la partie inférieure (5) coïncide à peu près avec celle de la partie supérieure (4) reposant sur la semelle supérieure (2) et **en ce que** la vis de serrage (6) traverse le tenon (8) et est appliquée par derrière contre la partie supérieure (4).

2. Dispositif selon la revendication 1, **caractérisé en ce que** la partie inférieure (5) est écartée de la semelle supérieure (2) au moyen d'un écarteur inférieur (18).

3. Dispositif selon la revendication 1, **caractérisé en ce qu'**un écarteur supérieur (13) est ancré dans la partie supérieure (4) et assure l'écartement de la plaque (1) par rapport à la semelle supérieure (2).

4. Dispositif selon la revendication 3, **caractérisé en ce qu'**une vis (14) traverse un gabarit de trous (15) de la plaque (1) et se visse dans un taraudage de l'écarteur supérieur (13) de la partie supérieure (4).

5. Dispositif selon la revendication 1, **caractérisé en ce que** la partie supérieure (4) est reliée à la plaque (1).

6. Dispositif selon la revendication 1, **caractérisé en ce qu'**en position de fermeture (11), la partie inférieure (5) est appuyée, en dehors du bord extérieur (7), contre la partie supérieure (4) au moyen d'une épaule (17).

7. Dispositif selon la revendication 6, **caractérisé en ce que** la hauteur libre de l'épaule (17) est à peu près identique à l'épaisseur de la semelle supérieure (2).

8. Dispositif selon la revendication 1, **caractérisé en ce que** l'angle du filet du filetage (16) du tenon (8) est supérieur à l'angle du filet de la vis de serrage (6).

9. Dispositif selon la revendication 1, **caractérisé en ce que** le filetage (16) du tenon (8) est pourvu d'un revêtement améliorant la capacité de glissement des pas de filetage.
